# EUROPEAN PATENT APPLICATION

(11) **EP 1 635 546 A1**
(43) Date of publication of application: **15.03.2006**
(21) Application number: 04255439.4
(22) Date of filing: 08.09.2004
(51) Int. Cl.: H04M 1/725

(54) **Combined and stand-alone hand-held mobile communication system**

(71) Applicant: Yang, Tai-Her, Si-Hu Town, Dzan-Hwa (TW)
(72) Inventor: Yang, Tai-Her, Si-Hu Town, Dzan-Hwa (TW)
(74) Representative: Pratt, David Martin

(57) **Abstract**

A hand held mobile communication system that permits combined or standalone hand held use, is comprised of a main unit (100) and an input and output interface unit (200) provided, and, as applicable, both units are combined or standalone hand held use.

## Description

### BACKGROUND OF THE INVENTION

### (a) Field of the Invention

The present invention is related to a combined and standalone hand held mobile communication system, and more particularly, to one that the main unit and the input and output interface unit of the system are separately provided to allow combined or standalone hand held use.

### (b) Description of the Prior Art:

Conventional mobile communication system, such as a cell phone, usually has its main unit and the input and output interface unit to be integrated in one. Though a wireless earphone, or a wired earphone is provided for RF communication between two sets of cell phone to avoid direct contact of one's cheek with the cell phone, the handset is built in the cell phone, the talking function is compromised when the distance between the handset and the talker get longer.

### SUMMARY OF THE INVENTION

The primary purpose of the present invention is to provide a hand held mobile communication system that allows combined or standalone use. To achieve the purpose, the main unit and input and output interface unit, are separated for combined or standalone hand held use. Both units are respectively provided with a portable battery source, an optional wireless video, audio, A/V, control signals receiving and transmission device, or a transmission interface comprised of a transmission conductor and a plug and socket set to serve as the source or signal for linking the main unit and the input and output interface unit. In addition to functioning as a cell phone for voice communication, the present invention may provide at the same time other functions normally provided by a mobile communication system or by a information process device including a camera-recorder, a tape recorder, transmission and receiving of AV messages, or a PDA.

### BRIEF DESCRIPTION OF THE DRAWINGS

Fig. 1 is a block chart showing a basic structure of the present invention.
Fig. 2 is a block chart showing a system of wireless intercom handset added with a secondary receiver and a secondary transmitter, and related circuit.

### DETAILED DESCRIPTION OF THE PREFERRED EMBODIMENTS

A hand held mobile communication system containing a main unit and an input and output interface unit that can be combined for operation or operated separately. When the present invention is applied to a cell phone, the cell phone is designed to such that both of the main unit and the input and output interface unit can be combined or separately provided for hand use. A portable battery source is each provided to, or is provided only to either of both the main unit and the input and output interface unit. A conductor and a plug and socket set are provided for mutual messaging between both units, or an interface for transmission of wireless video, or audio, or A/V signals, or control and operation signals that executes one-way or two-way RF, IR or ultrasonic communication is provided, so that both units when combined or separately provided are capable of functioning as a cell phone to execute external two-2ay communication, audio and/or video recording.

The mobile communication system containing the main unit and the input and output interface unit either combined or separately provided for hand held use as applicable. When separately provided, if either unit is provided with a portable battery source, then such unit serves as the source and an interface for the transmission of video, or audio, or A/V signals, or control and operation signals by means of a conductor. If both units are each provided with the portable battery source, a direct transmission is made possible with the transmission conductor or the plug and socket set as the transmission interface; meanwhile, both units may be each respectively provided with a wireless transmission interface comprised of a transmission and receiving device. Wherein, the transmission interface works with an RF electromagnetic wave, or infrared, or ultrasonic at a single frequency, multiple-frequency, switched or coded frequency that is same as or different from the frequency used for external communication by the main unit, so to execute wireless transmission of video, audio, A/V, or control and operation signals between two units; or transmission to another hand held communication system provided with identical transmission and receiving device, or another hand-held mobile communication system that can be combined or separately provided for operation, or another communication system. The frequency may be freely selected or a protocol, such as Bluetooth frequency can be use. Any mechanism allowing easy attachment of one unit to and detachment from the other unit is provided to combine both units by insertion, clicking locking, rotating, or magnetism. When combined, both units are applied for transmission via the transmission conductor, or linked to the plug and socket set to transmit source, video, audio, A/V or control and operation signals; or having the transmission and receiving device as a transmission interface. Wherein, the transmission interface works with an RF electromagnetic wave, or infrared, or ultrasonic at a single frequency, multiple-frequency, switched or coded frequency that is same as or different from the frequency used for external communication by the main unit, so to execute wireless transmission of video, audio, A/V, or control and operation signals between two units; or transmission to another hand held communication system provided with identical transmission and receiving device, or another hand-held mobile communication system that can be combined or separately provided for operation, or another communication system. The frequency may be freely selected or a protocol, such as Bluetooth frequency can be use.

The configuration of the structure of the combined or standalone hand-held communication system is described as follows.

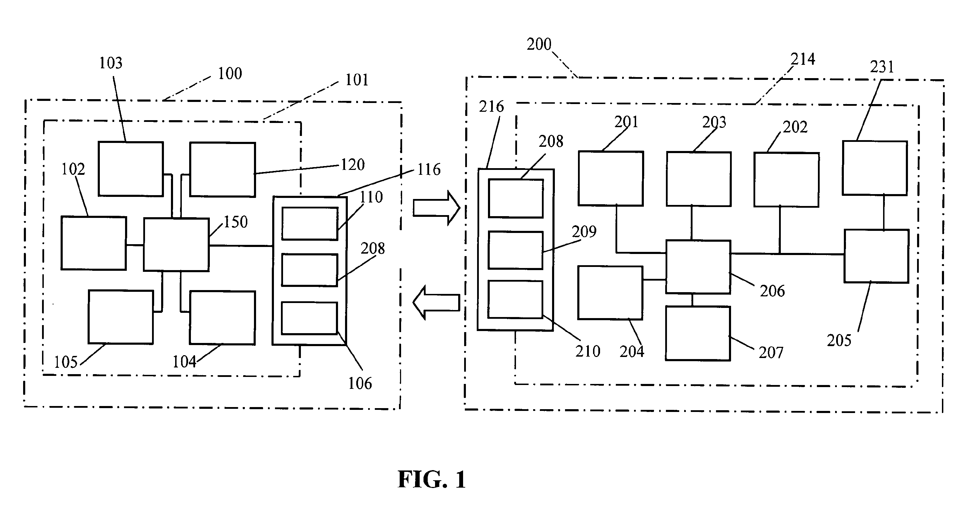

Fig. 1 shows a block chart of the basic structure of the present invention. Wherein, the present invention is essentially comprised of a main unit and an input and output interface unit, and each unit is respectively provided with a portable battery source device, a transmission conductor, or a wireless transmission interface to transmit video, audio, AN, or control and operation signals, and a mechanism to combine or separate both units characterized by that:
in the hand held communication system comprised of the main unit and the input and output interface unit that allows combined use or standalone use, the input and output interface unit is separately provided with a portable battery source so that the structure of the main unit and that of the input and output interface unit allow standalone hand held operation. Meanwhile when both structures are linked with the transmission conductor as the transmission interface, or having the transmission and receiving device as a transmission interface; wherein, the transmission interface works with an RF electromagnetic wave, or infrared, or ultrasonic at a single frequency, multiple-frequency, switched or coded frequency that is same as or different from the frequency used for external communication by the main unit, so to execute wireless transmission of video, audio, A/V, or control and operation signals between two units. The structure of the main unit and that of the input and output interface unit can be combined into one for hand held operation while the transmission conductor, or the plug and socket set is used as the transmission interface to transmit source, video, audio, A/V, or control and operation signals between two units.

The combined and standalone hand held mobile communication system as illustrated in Fig. 1 is essentially comprised of:
a main unit 100: related to a hand held mobile communication system of the prior art, or it is further provided with AN recording function, audio recording function, transmission and receiving A/V message, or structured into a mobile communication system such as a PDA, or into a hand held mobile communication system with normal functions for information process; to be provided inside an standalone casing 101. The standalone casing 101 is provided also to accommodate a circuit 150 that matches the function of the main unit 100. As applicable, an operation interface 102, a text or image display 120, a circuit 103 for external communication, a memory 104, a portable battery source 105 and a wireless transmission interface comprised of a wireless transmission and receiving device 110, wherein, the wireless transmission interface works with an RF electromagnetic wave, or infrared, or ultrasonic at a single frequency, multiple-frequency, switched or coded frequency that is same as or different from the frequency used for external communication by the main unit, so to execute wireless transmission of video, audio, A/V, or control and operation signals between two units; or to another hand held communication system provided with identical transmission and receiving device, or another hand-held mobile communication system that can be combined or separately provided for operation, or another communication system. The frequency may be freely selected or a protocol, such as Bluetooth frequency can be use. Alternatively, a wired transmission interface comprised of a transmission conductor 108 or a plug and socket set 109, adapted with either or both of the wireless or wired transmission to provide a transmission interface 116 for the transmission of video, audio, AN, or control and operation signals. Furthermore, a mechanism allowing easy attaching or detaching an input and output transmission unit 200 to or from the main unit 100 by insertion, clicking, locking, rotating or magnetism;
the input and output interface unit 200: provided with a standalone casing 214 accommodating an input receiver 201 of a conventional hand held mobile communication system, an output loudspeaker 202, or as applicable, a display 220, and a matching local circuit 206. In addition to providing the audio input, audio output or video or text display functions, the standalone casing 214 is further provided with an A/V recorder 231 and its related circuit 205 for taking picture, or continuous image recording, or taking picture and audio recording, and/or continuous image recording and audio recording.

A memory 204 and a portable battery source 207 or a transmission conductor 208 or a plug and socket set 209 as the source to lead in the transmission interface are adapted as options to the input and output interface unit 200. When the portable battery source 207 is separately provided, an option of wireless transmission interface comprised of a wireless transmission and receiving device 210, or a wired transmission interface comprised of the transmission conductor 208 or the plug and socket set 209 may be provided. When the wireless transmission interface is selected, the frequency used by the main unit for external communication may be of the same frequency or a single frequency, multi-frequency, or variable frequency of different frequency, or coded RF electromagnetic wave, or infrared or ultrasonic may be selected. A transmission interface 216 for video, or audio or AN or control signal transmission comprised of either or both of the wireless transmission interface or the wired transmission interface is provided to execute transmission by a transmission interface 116 on the main unit 100 via the wired transmission interface comprised of the plug and socket set or the conductor, or to execute relative transmission via the wireless transmission interface.

A standalone casing 214 containing the input and output interface unit 200 is provided with a mechanism to facilitate attaching or detaching the standalone casing 214 to or from the main unit 100 by insertion, clicking, locking, rotating or magnetism.

As applicable, the input and output interface unit 200 is further provided with a display 203, the A/V recorder 231, and related structure and circuit that provide audio input, audio output, and any function of taking picture, continuous image recording and/or taking picture and audio recording.

In the hand held mobile communication system that allows separate or combined use is included with a mechanism to combine or separate both standalone casings, and the transmission interface 116 and another transmission interface 216 respectively provided for both units for video, audio, A/V, or control and operation signals when the system is in the state of being integrated for combined or standalone hand held use; the selection of the associated video, audio, A/V, or control and operation signals is made depending on function setup and circuit characteristics applicable to the main unit 100 and the input and output interface unit 200, and on whether both units are combined or separated for use. Transmission mode and device for video, audio, A/V or control and operation signals include:
(1) a transmission interface comprised of two plug and socket sets respectively adapted to each standalone unit that are mutually matching to each other for standalone hand held use, and for combined hand held use to transmit source energy, video, audio, A/V or control and operation signals;
(2) a transmission conductor with one end fixed adapted with a retractable structure to be provided to the main unit 100, or the input and output interface unit 200 while the unit not provided with the transmission conductor is provided with a plug and socket set to form a transmission interface with the matching plug and socket set provided on the other end of the transmission conductor for functioning as a transmission power or a transmission conductor in the transmission of video, audio, A/V, or control and operation signals. The transmission conductor is further included with a conductor set that can be automatically retracted for storage.
(3) a detachable transmission conductor: related to a conductor with both ends each provided with a plug and socket set to form a transmission interface with that provided to the main unit 100 or the input and output interface unit 200, so that when both units are separated for use, two plug and socket sets respectively provided on both ends of the conductor are plugged into both of the main unit 100 and the input and output interface unit 200 for the transmission of video, audio, AN, or control and operation signals.
(4) when the transmission mode described in the preceding subparagraphs (1), (2) or (3), a portable battery source is separately provided to any device that can be combined to another device or separated for use, or to any one or more than one of the device;
(5) a wireless transmission interface among the devices works with an RF electromagnetic wave, or infrared, or ultrasonic at a single frequency, multiple-frequency, switched or coded frequency that is same as or different from the frequency used for external communication by the main unit 100, so to execute wireless transmission of video, audio, A/V, or control and operation signals between two units; or transmission to another hand held communication system provided with identical transmission and receiving device, or another hand-held mobile communication system that can be combined or separately provided for operation, or another communication system. The frequency may be freely selected or a protocol, such as Bluetooth frequency can be use.

The basic structure of the mobile communication system of the present invention that allows combined or standalone hand held use is further characterized by that:
(1) a manual control and operation switch is provided as applicable to control and operate the source device each provided to the main unit 100 and the input and output interface unit 200;
(2) a transmission interface of one-way transmission or two-way transmission and receiving structure that works with an RF electromagnetic wave, or infrared, or ultrasonic at a single frequency, multiple-frequency, switched or coded frequency that is same as or different from the frequency used for external communication by the main unit; or
(3) two transmission interfaces 116, 216 that are directly and mutually plugged in and conducted respectively to the plug and socket set provided to the main unit 100 and the input and output interface unit 200, or via a transmission conductor connected to both of the main unit 100 and the input and output interface unit 200; and
(4) a conduction contact, and a sensor switch comprised of a dynamo-electronic or solid state electronic device are provided on where the main unit 100 is combined to the input and output interface unit 200 to automatically cut off the source for the receiving and transmission circuit provided between both of the main unit 100 and the input and output interface unit 200 while directly conducting the input and output interface circuit between both units.

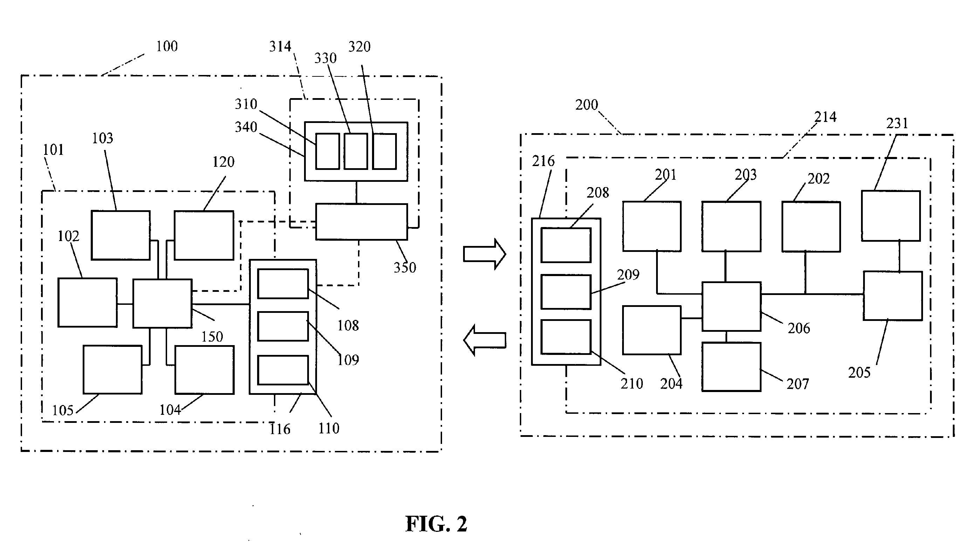

Furthermore, as illustrated in Fig. 2, the main unit 100 illustrated in Fig. 1 is provided with a device of a wireless intercom handset device 340 comprised of a secondary receiver 310, a secondary transmitter 320, and their related circuits 330. The wireless intercom handset device 340 either integrated with the main unit 100, or standalone in a dedicated casing 314 that can be combined to the main unit 100 is connected to the circuit of the mina unit 100 with a conductor or a plug and socket set for the wireless intercom handset device 340 to provide wireless intercom handset function in communicating with the input and output interface unit 200 via the wireless transmission and receiving device 110 on the main unit 100 in the mobile communication system, or to another hand held communication system provided with identical transmission and receiving device, or another hand-held mobile communication system that can be combined or separately provided for operation, or another communication system. The frequency may be freely selected or a protocol, such as Bluetooth frequency can be use. Fig. 2 shows a block chart showing that the system illustrated in Fig. 1 is further provided with the wireless intercom handset device 340 comprised of the secondary receiver 310, the second transmitter 320 and their related circuits 330.

An optional switch 350 is provided to the preferred embodiment given in Fig. 2 for the control of the operation status between the wireless transmission and receiving device 110 adapted to the main unit 100 and the additional wireless intercom handset device 340 in the following applications:
(1) the wireless intercom handset device 340 is used to substitute the input and output interface unit 200 to be incorporated with the main unit 100 for external communication of transmission and receiving;
(2) the connection between the wireless intercom handset device 340 comprised of the secondary receiver 310, the secondary transmitter 320 and their related circuits 330, and the wireless transmission and receiving device 110 of the main unit 100 is cut off, and the connection to the portable battery source 207 is also interrupted for power saving purpose;
(3) the wireless intercom handset device 340 comprised of the secondary receiver 310, the secondary transmitter 320 and their related circuits 330 executes short range intercom of wireless one way or two-way communication with the input and output interface unit 200 by means of the wireless transmission and receiving device 110 provided in the main unit 100, and the wireless transmission and receiving device 210 provided in the input and output interface unit 200;
(4) a switch 350 cuts off the operation of external communication circuit in the main unit 100 for power saving purpose when the wireless intercom handset device 340 is engaging in one way or two-way intercom with the input and output interface unit 200; or
(5) the switch 350 provides parallel operation by controlling the main unit 100 to be reserved for external communication when the wireless intercom handset device 340 is engaging in one way or two-way intercom with the input and output interface unit 200.

The portable source device provided to each unit in the hand held mobile communication system of the present invention that allows combined or standalone use is recharged by either of the following methods:
(1) an external charging source dedicated to that unit;
(2) replacement with another fully charged battery source;
(3) an external charging source common to both units when combined; or
(4) mutual recharging between battery source devices of both units.

The portable source device provided to each unit in the hand held mobile communication system of the present invention that allows combined or standalone use can be applied to a digital or analogy hand held cell phone, and divided into two units respectively of the main unit 100 and the input and output interface unit 200. Additional to that both units rely upon the transmission conductors 108, 208 or the plug and socket sets 109, 209 as the transmission interface for direct transmission, a wireless transmission interface comprised of a transmission and receiving device that works with an RF electromagnetic wave, or infrared, or ultrasonic at a single frequency, multiple-frequency, switched or coded frequency that is same as or different from the frequency used for external communication by the main unit, so to execute wireless transmission of video, audio, A/V, or control and operation signals between two units; or transmission to another hand held communication system provided with identical transmission and receiving device, or another hand-held mobile communication system that can be combined or separately provided for operation, or another communication system. The frequency may be freely selected or a protocol, such as Bluetooth frequency can be use. Any mechanism allowing easy attachment of one unit to and detachment from the other unit is provided to combine both units by insertion, clicking locking, rotating, or magnetism. In addition to being applied to a cell phone that provides at the same time functions of taking picture, audio recording or image transmission, the mobile communication system of the present invention that allows combined or standalone use is characterized by permitting combined or standalone hand held operation to facilitate that either of the input and output interface unit 200 and the main unit 100 operates independently, or to separately execute taking picture and display when an integrated mobile communication system is prevented from offering ideal recording and display visual angle. Making the applications of a mobile communication system even more agile is where the innovation of the present invention lies, and this patent application is therefore duly filed.

## Claims

1. A hand held mobile communication system containing a main unit and an input and output interface unit that can be combined for operation or operated separately; when separately provided, if either unit is provided with a portable battery source, then such unit serves as the source and an interface for the transmission of video, or audio, or A/V signals, or control and operation signals by means of a conductor; if both units are each provided with the portable battery source, a direct transmission is made possible with the transmission conductor or the plug and socket set as the transmission interface; meanwhile, both units may be each respectively provided with a wireless transmission interface comprised of a transmission and receiving device working with an RF electromagnetic wave, or infrared, or ultrasonic at a single frequency, multiple-frequency, switched or coded frequency that is same as or different from the frequency used for external communication by the main unit, so to execute wireless transmission of video, audio, A/V, or control and operation signals between two units; or transmission to another hand held communication system provided with identical transmission and receiving device, or another hand-held mobile communication system that can be combined or separately provided for operation, or another communication system; and the frequency being related to a freely selected or a protocol, such as Bluetooth frequency; a mechanism allowing easy attachment of one unit to and detachment from the other unit is provided to combine both units by insertion, clicking locking, rotating, or magnetism; when combined, both units are applied for transmission via the transmission conductor, or linked to the plug and socket set to transmit source, video, audio, AN or control and operation signals; or having the transmission and receiving device as a transmission interface working with an RF electromagnetic wave, or infrared, or ultrasonic at a single frequency, multiple-frequency, switched or coded frequency that is same as or different from the frequency used for external communication by the main unit, so to execute wireless transmission of video, audio, A/V, or control and operation signals between two units; or transmission to another hand held communication system provided with identical transmission and receiving device, or another hand-held mobile communication system that can be combined or separately provided for operation, or another communication system; and with the frequency being related to a freely selected or a protocol, such as Bluetooth frequency.

2. A hand held mobile communication system containing a main unit and an input and output interface unit that can be combined for operation or operated separately as claimed in Claim 1, wherein, the present invention is essentially comprised of a main unit and an input and output interface unit, and each unit is respectively provided with a portable battery source device, a transmission conductor, or a wireless transmission interface to transmit video, audio, A/V, or control and operation signals, and a mechanism to combine or separate both units **characterized by** that:
in the hand held communication system comprised of the main unit and the input and output interface unit that allows combined use or standalone use, the input and output interface unit is separately provided with a portable battery source so that the structure of the main unit and that of the input and output interface unit allow standalone hand held operation. Meanwhile when both structures are linked with the transmission conductor as the transmission interface, or having the transmission and receiving device as a transmission interface; wherein, the transmission interface works with an RF electromagnetic wave, or infrared, or ultrasonic at a single frequency, multiple-frequency, switched or coded frequency that is same as or different from the frequency used for external communication by the main unit, so to execute wireless transmission of video, audio, AN, or control and operation signals between two units. The structure of the main unit and that of the input and output interface unit can be combined into one for hand held operation while the transmission conductor, or the plug and socket set is used as the transmission interface to transmit source, video, audio, A/V, or control and operation signals between two units.

3. A hand held mobile communication system containing a main unit and an input and output interface unit that can be combined for operation or operated separately as claimed in Claim 1, wherein, it is essentially comprised of
a main unit 100: related to a hand held mobile communication system of the prior art, or it is further provided with A/V recording function, audio recording function, transmission and receiving A/V message, or structured into a mobile communication system such as a PDA, or into a hand held mobile communication system with normal functions for information process; to be provided inside an standalone casing 101. The standalone casing 101 is provided also to accommodate a circuit 150 that matches the function of the main unit 100. As applicable, an operation interface 102, a text or image display 120, a circuit 103 for external communication, a memory 104, a portable battery source 105 and a wireless transmission interface comprised of a wireless transmission and receiving device 110, wherein, the wireless transmission interface works with an RF electromagnetic wave, or infrared, or ultrasonic at a single frequency, multiple-frequency, switched or coded frequency that is same as or different from the frequency used for external communication by the main unit, so to execute wireless transmission of video, audio, A/V, or control and operation signals between two units; or to another hand held communication system provided with identical transmission and receiving device, or another hand-held mobile communication system that can be combined or separately provided for operation, or another communication system. The frequency may be freely selected or a protocol, such as Bluetooth frequency; or alternatively, a wired transmission interface comprised of a transmission conductor 108 or a plug and socket set 109, adapted with either or both of the wireless or wired transmission to provide a transmission interface 116 for the transmission of video, audio, A/V, or control and operation signals. Furthermore, a mechanism allowing easy attaching or detaching an input and output transmission unit 200 to or from the main unit 100 by insertion, clicking, locking, rotating or magnetism;
the input and output interface unit 200: provided with a standalone casing 214 accommodating an input receiver 201 of a conventional hand held mobile communication system, an output loudspeaker 202, or as applicable, a display 220, and a matching local circuit 206. In addition to providing the audio input, audio output or video or text display functions, the standalone casing 214 is further provided with an AN recorder 231 and its related circuit 205 for taking picture, or continuous image recording, or taking picture and audio recording, and/or continuous image recording and audio recording;
a memory 204 and a portable battery source 207 or a transmission conductor 208 or a plug and socket set 209 as the source to lead in the transmission interface are adapted as options to the input and output interface unit 200. When the portable battery source 207 is separately provided, an option of wireless transmission interface comprised of a wireless transmission and receiving device 210, or a wired transmission interface comprised of the transmission conductor 208 or the plug and socket set 209 may be provided. When the wireless transmission interface is selected, the frequency used by the main unit for external communication may be of the same frequency or a single frequency, multi-frequency, or variable frequency of different frequency, or coded RF electromagnetic wave, or infrared or ultrasonic may be selected; a transmission interface 216 for video, or audio or A/V or control signal transmission comprised of either or both of the wireless transmission interface or the wired transmission interface is provided to execute transmission by a transmission interface 116 on the main unit 100 via the wired transmission interface comprised of the plug and socket set or the conductor, or to execute relative transmission via the wireless transmission interface;
and a standalone casing 214 containing the input and output interface unit 200 is provided with a mechanism to facilitate attaching or detaching the casing 214 to or from the main unit 100 by insertion, clicking, locking, rotating or magnetism;
as applicable, the input and output interface unit 200 is further provided with a display 203, the A/V recorder 231, and related structure and circuit that provide audio input, audio output, and any function of taking picture, continuous image recording and/or taking picture and audio recording.

4. A hand held mobile communication system containing a main unit and an input and output interface unit that can be combined for operation or operated separately as claimed in Claim 1, wherein, a mechanism is provided to combine or separate both standalone casings, and the transmission interface 116 and another transmission interface 216 respectively provided for both units for video, audio, A/V, or control and operation signals when the system is in the state of being integrated for combined or standalone hand held use; the selection of the associated video, audio, A/V, or control and operation signals is made depending on function setup and circuit characteristics applicable to the main unit 100 and the input and output interface unit 200, and on whether both units are combined or separated for use. Transmission mode and device for video, audio, A/V or control and operation signals include: a transmission interface comprised of plug and socket sets respectively adapted to each standalone unit that are mutually matching to each other for standalone hand held use, and for combined hand held use to transmit source energy, video, audio, A/V or control and operation signals.

5. A hand held mobile communication system containing a main unit and an input and output interface unit that can be combined for operation or operated separately as claimed in Claim 1, wherein, a transmission conductor with one end fixed adapted with a retractable structure to be provided to the main unit 100, or the input and output interface unit 200 while the unit not provided with the transmission conductor is provided with a plug and socket set to form a transmission interface with the matching plug and socket set provided on the other end of the transmission conductor for functioning as a transmission power or a transmission conductor in the transmission of video, audio, AN, or control and operation signals. The transmission conductor is further included with a conductor set that can be automatically retracted for storage.

6. A hand held mobile communication system containing a main unit and an input and output interface unit that can be combined for operation or operated separately as claimed in Claim 1, wherein, a detachable mechanism is provided to combine or separate the casings respectively provided to each unit and a conductor that is detachable either in combined use or standalone use; the conductor having its both ends each provided with a plug and socket set to form a transmission interface with that provided to the main unit 100 or the input and output interface unit 200, so that when both units are separated for use, two plug and socket sets respectively provided on both ends of the conductor are plugged into both of the main unit 100 and the input and output interface unit 200 for the transmission of video, audio, AN, or control and operation signals.

7. A hand held mobile communication system containing a main unit and an input and output interface unit that can be combined for operation or operated separately as claimed in Claim 1, wherein, a detachable mechanism is provided to combine or separate the casings respectively provided to each unit and when the transmission mode respectively claimed in Claims 4, 5 and 6, a portable battery source is separately provided to any device that can be combined to another device or separated for use, or to any one or more than one of the device.

8. A hand held mobile communication system containing a main unit and an input and output interface unit that can be combined for operation or operated separately as claimed in Claim 1, wherein, a detachable mechanism is provided to combine or separate the casings respectively provided to each unit, and a wireless transmission interface among the devices works with an RF electromagnetic wave, or infrared, or ultrasonic at a single frequency, multiple-frequency, switched or coded frequency that is same as or different from the frequency used for external communication by the main unit 100, so to execute wireless transmission of video, audio, A/V, or control and operation signals between two units; or transmission to another hand held communication system provided with identical transmission and receiving device, or another hand-held mobile communication system that can be combined or separately provided for operation, or another communication system with the frequency being related to a freely selected or a protocol, such as Bluetooth frequency.

9. A hand held mobile communication system containing a main unit and an input and output interface unit that can be combined for operation or operated separately as claimed in Claim 1, wherein, a manual control and operation switch is provided as applicable to control and operate the source device each provided to the main unit 100 and the input and output interface unit 200.

10. A hand held mobile communication system containing a main unit and an input and output interface unit that can be combined for operation or operated separately as claimed in Claim 1, wherein, a transmission interface of one-way transmission or two-way transmission and receiving structure that works with an RF electromagnetic wave, or infrared, or ultrasonic at a single frequency, multiple-frequency, switched or coded frequency that is same as or different from the frequency used for external communication by the main unit.

11. A hand held mobile communication system containing a main unit and an input and output interface unit that can be combined for operation or operated separately as claimed in Claim 1, wherein, two transmission interfaces 116, 216 that are directly and mutually plugged in and conducted respectively to the plug and socket set provided to the main unit 100 and the input and output interface unit 200, or via a transmission conductor connected to both of the main unit 100 and the input and output interface unit 200.

12. A hand held mobile communication system containing a main unit and an input and output interface unit that can be combined for operation or operated separately as claimed in Claim 1, wherein, it is further **characterized by** that a conduction contact, and a sensor switch comprised of a dynamo-electronic or solid state electronic device are provided on where the main unit 100 is combined to the input and output interface unit 200 to automatically cut off the source for the receiving and transmission circuit provided between both of the main unit 100 and the input and output interface unit 200 while directly conducting the input and output interface circuit between both units.

13. A hand held mobile communication system containing a main unit and an input and output interface unit that can be combined for operation or operated separately as claimed in Claim 1, wherein, it is further provided with a device of a wireless intercom handset device 340 comprised of a secondary receiver 310, a secondary transmitter 320, and their related circuits 330. The wireless intercom handset device 340 either integrated with the main unit 100, or standalone in a dedicated casing 314 that can be combined to the main unit 100 is connected to the circuit of the mina unit 100 with a conductor or a plug and socket set for the wireless intercom handset device 340 to provide wireless intercom handset function in communicating with the input and output interface unit 200 via the wireless transmission and receiving device 110 on the main unit 100 in the mobile communication system, or to another hand held communication system provided with identical transmission and receiving device, or another hand-held mobile communication system that can be combined or separately provided for operation, or another communication system with the frequency being related to a freely selected or a protocol, such as Bluetooth frequency.

14. A hand held mobile communication system containing a main unit and an input and output interface unit that can be combined for operation or operated separately as claimed in Claim 13, wherein, an optional switch 350 is provided for the control of the operation status between the wireless transmission and receiving device 110 adapted to the main unit 100 and the additional wireless intercom handset device 340 in the following applications:
(1) the wireless intercom handset device 340 is used to substitute the input and output interface unit 200 to be incorporated with the main unit 100 for external communication of transmission and receiving;
(2) the connection between the wireless intercom handset device 340 comprised of the secondary receiver 310, the secondary transmitter 320 and their related circuits 330, and the wireless transmission and receiving device 110 of the main unit 100 is cut off, and the connection to the portable battery source 207 is also interrupted for power saving purpose;
(3) the wireless intercom handset device 340 comprised of the secondary receiver 310, the secondary transmitter 320 and their related circuits 330 executes short range intercom of wireless one way or two-way communication with the input and output interface unit 200 by means of the wireless transmission and receiving device 110 provided in the main unit 100, and the wireless transmission and receiving device 210 provided in the input and output interface unit 200;
(4) a switch 350 cuts off the operation of external communication circuit in the main unit 100 for power saving purpose when the wireless intercom handset device 340 is engaging in one way or two-way intercom with the input and output interface unit 200; or
(5) the switch 350 provides parallel operation by controlling the main unit 100 to be reserved for external communication when the wireless intercom handset device 340 is engaging in one way or two-way intercom with the input and output interface unit 200.

15. A hand held mobile communication system containing a main unit and an input and output interface unit that can be combined for operation or operated separately as claimed in Claim 1 or 13, wherein, the portable source device provided to each unit in the hand held mobile communication system of the present invention that allows combined or standalone use is recharged by either of the following methods:
(1) an external charging source dedicated to that unit;
(2) replacement with another fully charged battery source;
(3) an external charging source common to both units when combined; or
(4) mutual recharging between battery source devices of both units.

16. A hand held mobile communication system containing a main unit and an input and output interface unit that can be combined for operation or operated separately as claimed in Claim 1, wherein, both units are respectively provided with a portable battery source, an optional wireless video, audio, A/V, control signals receiving and transmission device, or a transmission interface comprised of a transmission conductor and a plug and socket set to serve as the source or signal for linking the main unit and the input and output interface unit; in addition to functioning as a cell phone for voice communication, the present invention may provide at the same time other functions normally provided by a mobile communication system or by a information process device including a camera-recorder, a tape recorder, transmission and receiving of AV messages, or a PDA.

17. A hand-held mobile communications system that permits combined or standalone hand held use, the system comprises a main unit and a separate input-and-output interface unit, wherein each of the units is operational independently for standalone hand held use, or the two units can be combined to operate together.
